# EUROPÄISCHE PATENTSCHRIFT

(11) **EP 3 883 841 B1**
(45) Veröffentlichungstag und Bekanntmachung des Hinweises auf die Patenterteilung: **19.06.2024**
(21) Anmeldenummer: 19786951.4
(22) Anmeldetag: 11.10.2019
(51) Int. Cl.: B62D 21/11, B62D 25/08

(54) **VORBAUSTRUKTURANORDNUNG FÜR EINEN KRAFTWAGENROHBAU**
FRONT-END STRUCTURE ASSEMBLY FOR A MOTOR VEHICLE BODYSHELL
ARRANGEMENT DE STRUCTURE FRONTALE POUR UNE CAISSE BRUTE DE VÉHICULE À MOTEUR

(30) Priorität: 22.11.2018 DE 102018009196
(43) Veröffentlichungstag der Anmeldung: 29.09.2021
(73) Patentinhaber: Mercedes-Benz Group AG, 70372 Stuttgart (DE)
(72) Erfinder: CARL, Michael, 70839 Gerlingen (DE)
(74) Vertreter: Novagraaf Group
(86) Internationale Anmeldenummer: PCT/EP2019/077554
(87) Internationale Veröffentlichungsnummer: WO 2020/104105

(56) Entgegenhaltungen:
- EP-A1- 2 921 377
- EP-A1- 3 398 837
- US-A1- 2017 120 850

## Beschreibung

Die Erfindung betrifft eine Vorbaustrukturanordnung für einen Kraftwagenrohbau gemäß dem Oberbegriff des Anspruchs 1.

Aus der DE 11 2013 001 681 T5 geht eine Vorbaustrukturanordnung hervor, bei der eine Vorbaustruktur des Kraftwagenrohbaus zwei in Fahrzeuglängsrichtung parallel zueinander und in einem Abstand voneinander verlaufende Längsträger umfasst, welche an ihren vorderen Enden über einen Querträger miteinander verbunden sind. Weiterhin umfasst die Vorbaustrukturanordnung einen am Kraftwagenrohbau befestigten Hilfsrahmen, welcher unterhalb der Längsträger angeordnet ist und welcher ein vorderes und hinteres Querelement sowie jeweilige Längselemente umfasst, welche in Fahrzeuglängsrichtung von hinten nach vorne hin voneinander divergieren und zumindest bereichsweise schräg zu den Längsträgern der Vorbaustruktur verlaufen. Mit ihren jeweiligen vorderen Endbereichen schließen die beiden Längselemente des Hilfsrahmens dabei - in Fahrzeughochrichtung betrachtet - in Überdeckung mit den Längsträgern der Vorbaustruktur nach außen hin ab.

Aus der DE 10 2008 006 006 A1 geht ein Hilfsrahmen für ein Kraftfahrzeug hervor, welcher seitliche und in Fahrzeuglängsrichtung verlaufende Längsträger sowie ein plattenartiges Aussteifungselement umfasst, das von unten auf den Hilfsrahmen aufgesetzt ist und diesen allseitig zumindest teilweise überragt.

Aus der DE 10 2008 006 006 A1 geht weiterhin ein Hilfsrahmen für eine Vorderachse eines Kraftfahrzeugs hervor, der bodenseitig des Fahrzeugaufbaus angeordnet und mit einem Vorderachsquerträger und der Fahrzeugkarosserie verbunden ist, wobei der Hilfsrahmen divergierend zueinander angestellte Längsträger umfasst, die am hinteren Ende - in Bezug auf die Fahrtrichtung gesehen - mit einem plattenförmigen Versteifungselement verbunden sind.

Durch die zunehmende Vielfalt an Antriebsaggregaten von Kraftwagen ergeben sich viele unterschiedlichen Bauraumsituationen im Bereich der Vorbaustruktur, wodurch das Unfallverhalten unterschiedlicher Vorbaustrukturanordnungen erheblich variieren kann. Insbesondere Frontalkollisionen mit geringer Breitenüberdeckung der Unfallpartner beziehungsweise der Vorbaustrukturanordnung mit einer Crashbarriere oder auch ein Schrägaufprall auf einen Unfallgegner oder eine Crashbarriere, insbesondere mit geringer oder gar keiner Überdeckung der Vorbautragstruktur mit derjenigen des Unfallgegners/Hindernisses sind hinsichtlich des Unfallverhaltens bislang nur mit erheblichen anderweitigen Maßnahmen beherrschbar.

Aufgabe der vorliegenden Erfindung ist es, eine Vorbaustrukturanordnung der eingangs genannten Art zu schaffen, durch welche sich deren Unfallverhalten insbesondere bei Frontalkollisionen mit geringer oder gar keiner Überdeckung der Vorbaustruktur mit einem Unfallgegner oder einem Hindernis sowie bei einem Schrägaufprall der Vorbaustruktur auf einen Unfallgegner oder ein sonstiges Hindernis deutlich verbessern lässt.

Diese Aufgabe wird erfindungsgemäß durch eine Vorbaustrukturanordnung mit den Merkmalen des Anspruchs 1 gelöst. Vorteilhafte Weiterbildungen der Erfindung sind Gegenstand der abhängigen Ansprüche.

Die erfindungsgemäße Vorbaustrukturanordnung zeichnet sich dadurch aus, dass vordere Endbereiche der Längselemente des Hilfsrahmens die Längsträger der Vorbaustruktur in Fahrzeugquerrichtung außenseitig überragen dass diese Endbereiche der Längselemente des Hilfsrahmens in Fahrzeuglängsrichtung gesehen in zumindest teilweiser Überdeckung mit jeweiligen, gegenüber den korrespondierenden Längsträgern außenseitig überstehenden Endbereichen des Querträgers angeordnet sind. Mit anderen Worten sind die vorderen Endbereiche der Längselemente des

Hilfsrahmens so angeordnet, dass diese im Unterschied zum Stand der Technik bezogen auf die Fahrzeugquerrichtung nicht außenseitig in Überdeckung mit Längsträgern der Vorbaustruktur enden, sondern vielmehr überragen die Längselemente des Hilfsrahmens die entsprechenden Längsträger der Vorbaustruktur in Fahrzeugquerrichtung nach außen hin. Aus der Fahrzeughochrichtung betrachtet, das heißt in Draufsicht auf den Vorbau des Kraftwagens gesehen, ragen somit die Längselemente des Hilfsrahmens in Fahrzeugquerrichtung seitlich, das heißt in Kraftwagenquerrichtung (y-Richtung) weiter nach außen als die seitlich jeweils zugeordneten Längsträger der Vorbaustruktur.

Durch diese erfindungsgemäße Anordnung der vorderen Endbereiche der Längselemente wird insbesondere erreicht, dass bei Frontalkollisionen der Vorbaustruktur mit einem Unfallpartner oder einem Hindernis mit geringer Breitenüberdeckung, aber auch bei gar keiner Breitenüberdeckung oder bei einem Schräganprall auf ein Hindernis beziehungsweise einen Unfallpartner, bei welchem der jeweils seitlich korrespondierende Längsträger nicht getroffen und aktiviert wird, die durch die vorderen Endbereiche der Längselemente des Hilfsrahmens gebildete Schutzeinrichtung sehr frühzeitig unfallbedingte Aufprallenergie aufnimmt, was einerseits bei einer Deformation des Hilfsrahmens zu einer Energieabsorption führt und auch zu einer Verzögerung des Kraftwagens und andererseits bewirkt, dass über diese die Aufprallenergie auf den Hilfsrahmen und über dessen Anbindung an der Vorbaustruktur sowohl auf der stoßzugewandten Fahrzeugseite als auch auf der stoßabgewandten Fahrzeugseite an die Längsträger der Vorbaustruktur übertragen wird und gleichzeitig ein Impuls in Fahrzeugquerrichtung (y-Richtung) erzeugt wird, der das Fahrzeug im Verlauf der Kollision in Richtung der stoßabgewandten Fahrzeugseite bewegt. Durch die somit verbesserte Kräfteaufnahme wird einerseits die eingeleitete Aufprallenergie auf verbesserte Weise absorbiert und außerdem genutzt, um das Fahrzeug von dem Unfallgegner beziehungsweise dem Hindernis zu bewegen, um hierdurch übermäßige Intrusionen in die Fahrgastzelle zu vermeiden. Die Längselemente des Hilfsrahmens ergänzen somit insbesondere bei einer Frontalkollision der Vorbaustrukturanordnung mit einem Unfallgegner oder einem Hindernis mit geringer Breitenüberdeckung die Funktion der Endbereiche des Querträgers, welcher seitlich gegenüber dem korrespondierenden Längsträger übersteht, in optimaler Weise die Längsträger der Vorbaustruktur.

In weiterer Ausgestaltung der Erfindung hat es sich als zudem vorteilhaft gezeigt, wenn die vorderen Endbereiche der Längselemente des Hilfsrahmens - in Fahrzeugquerrichtung gesehen - in zumindest teilweiser Überdeckung mit einem seitlich korrespondierenden Vorderrad des Kraftwagens angeordnet sind. Hierdurch wird insbesondere bei einer Frontalkollision mit geringer Breitenüberdeckung, bei welcher zwar das Vorderrad, nicht jedoch der Längsträger der Vorbaustruktur vom Kollisionspartner getroffen und aktiviert wird, eine übermäßige Rückverlagerung des Vorderrads in Richtung der Fahrgastzelle mit einer damit verbundenen Intrusion verhindert.

Eine weitere vorteilhafte Ausgestaltung der Erfindung sieht vor, dass das hintere Querelement des Hilfsrahmens zumindest teilweise durch einen Vorderachsträger gebildet ist. Somit erfüllt dieser eine Doppelfunktion, was sich besonders auf die Herstellungskosten und das Gewicht des Fahrzeugs äußerst günstig auswirkt.

In diesem Zusammenhang hat es sich als weiter vorteilhaft gezeigt, wenn der Vorderachsträger an den Längsträgern der Vorbaustruktur und im Bereich eines Fahrzeugbodens und/oder einer Stirnwand der Fahrgastzelle befestigt ist. Hierdurch ergibt sich eine besonders günstige Abstützung des Vorderachsträgers und somit auch des gesamten Hilfsrahmens, um unfallbedingt eingeleitete Kräfte besonders günstig aufnehmen und übertragen zu können.

Als weiter vorteilhaft hat es sich gezeigt, wenn der Vorderachsträger als flächiges Tragelement ausgebildet ist. Das Tragelement weist ein geringes Gewicht und dennoch eine hohe Stabilität auf, um unfallbedingt eingeleitete Kräfte besonders günstig aufnehmen und übertragen zu können.

In weiterer Ausgestaltung der Erfindung sind der Vorderachsträger und die Längselemente des Hilfsrahmens als separate Bauteile ausgebildet, welche miteinander über jeweilige Fügeverbindungen und/oder mechanische Verbindungsmittel verbunden sind. Hierdurch lässt sich eine fertigungstechnisch und hinsichtlich der Kosten besonders günstige Baueinheit schaffen.

Weiterhin hat es sich als vorteilhaft gezeigt, wenn der Hilfsrahmen eine untere Längsträgerebene unterhalb der Hauptlängsträgerebene der Längsträger bildet. Auf diese Weise lassen sich unfallbedingt eingeleitete Kräfte besonders günstig über mehrere Lastebenen aufnehmen.

Schließlich hat es sich als vorteilhaft gezeigt, wenn das vordere Querelement des Hilfsrahmens über jeweilige Haltekonsolen an den Längsträgern befestigt ist. Somit wird auf optimale Weise eine entsprechende Abstützung des Hilfsrahmens an der Vorbaustruktur erreicht, sodass der Hilfsrahmen beispielsweise bei einer unfallbedingten Kraftbeaufschlagung nicht durch Einknicken oder dergleichen kollabieren kann.

Weitere Vorteile und Einzelheiten der Erfindung ergeben sich aus der nachfolgenden Beschreibung bevorzugter Ausführungsbeispiele sowie anhand der Zeichnung. Dabei zeigen:

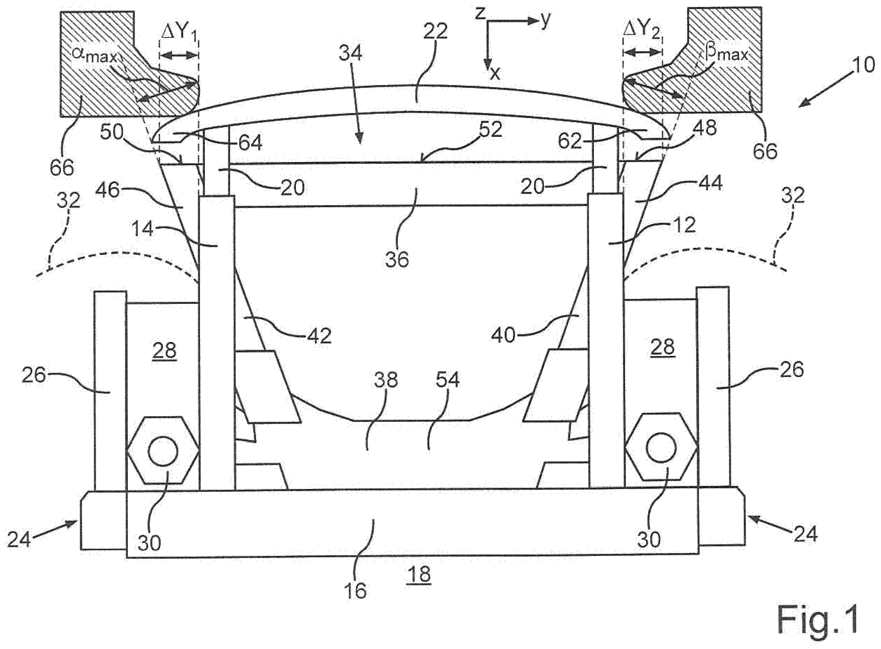

- Fig. 1: in schematischer Darstellung eine Draufsicht auf ein Ausführungsbeispiel der erfindungsgemäßen Vorbaustrukturanordnung für einen Kraftwagenrohbau mit einer Vorbaustruktur, welche zwei sich in Fahrzeuglängsrichtung erstreckende und über einen Querträger miteinander verbundene Längsträger umfasst, sowie einen unterhalb der Längsträger an der Vorbaustruktur angeordneten Hilfsrahmen, welcher jeweilige Längselemente umfasst, welche in Fahrzeuglängsrichtung von hinten nach vorne hin voneinander divergieren und jeweilige vordere Endbereiche umfassen, welche gegenüber den Längsträgern der Vorbaustruktur in Fahrzeugquerrichtung außenseitig überstehen;
- Fig. 2: eine Unteransicht auf die Vorbaustrukturanordnung gemäß Fig. 1;
- Fig. 3: eine Seitenansicht auf die Vorbaustrukturanordnung gemäß den Fig. 1 und 2, wobei insbesondere die Höhenlage des Hilfsrahmens unterhalb der Vorbaustruktur erkennbar ist;
- Fig. 4a,: b eine Draufsicht sowie eine Unteransicht auf eine Vorbaustrukturanordnung für einen Kraftwagenrohbau analog zu den Fig. 1 beziehungsweise 2; und in den
- Fig. 5a, b: jeweilige Seitenansichten auf die Vorbaustrukturanordnung gemäß den Fig. 4a und 4b mit dargestelltem Vorderrad beziehungsweise bei weggelassenem Vorderrad.

In den Fig. sind gleiche oder funktionsgleiche Elemente mit gleichen Bezugszeichen versehen.

In den Fig. 1 bis 3 ist in einer Draufsicht sowie einer Seitenansicht eine Vorbaustrukturanordnung für einen Personenkraftwagen dargestellt. Von einer Vorbaustruktur 10 sind im Wesentlichen jeweilige Hauptlängsträger 12, 14 erkennbar, welche sich exakt oder zumindest annähernd parallel zueinander ausgehend von einer vorderen Stirnwand 16 einer Fahrgastzelle 18 in Fahrzeuglängsrichtung (x-Richtung) nach vorne hin erstrecken. Bei einem anderen vorteilhaften Ausführungsbeispiel der Vorbaustrukturanordnung können die Längsträger, welche häufig auch als Hauptlängsträger bezeichnet werden, in einer leicht V-förmigen Anordnung angeordnet sein und damit also divergierend zueinander verlaufen.

Die beiden Längsträger 12, 14 weisen an ihren vorderen Enden jeweilige Energieabsorptionselemente 20 auf, über welche die beiden Längsträger 12, 14 mit einem Querträger 22 verbunden sind. Der Querträger 22 ist vorliegend als Stoßfängerquerträger ausgebildet, der gemäß einer vorteilhaften Ausführungsform der Vorbaustrukturanordnung hier gemeinsam mit den Energieabsorptionselementen 20 einem Frontmodul zugeordnet ist, welches an den vorderen Enden der Längsträger 12, 14 befestigt wird.

Vom Kraftwagenrohbau sind weiterhin jeweilige Seitenwände 24 im Bereich entsprechender Türsäulen (A-Säulen) dargestellt, welche mit der Stirnwand 16 verbunden sind. An der Stirnwand 16 sind auch obere Längsträger 26 einer oberen Längsträgerebene Zo abgestützt, welche im Bereich von Rohbauteilen 28 und Dämpferdome 30 angeordnet sind und sich dort in Fahrzeuglängsrichtung (x-Richtung) erstrecken. Die oberen Längsträgers 26 sind über die Rohbauteile 28 mit den Hauptlängsträgern 12, 14 verbunden sind. Wie in der Fig. angedeutet, sind die Rohbauteile 28 in den jeweiligen Dämpferdom 30 beziehungsweise Federbeinaufnahmen für die korrespondierenden, durch gestrichelte Linien angedeuteten Vorderräder 32 integriert.

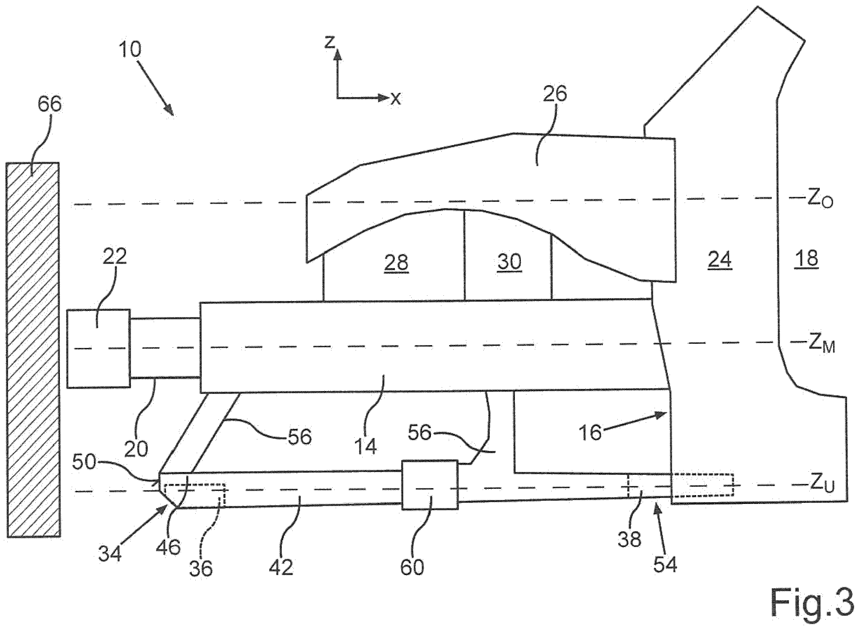

Neben der Vorbaustruktur 10 umfasst die Vorbaustrukturanordnung einen Hilfsrahmen 34, welcher sich - wie dies insbesondere aus Fig. 3 erkennbar ist - in einer unteren Längsträgerebene Zu unterhalb der Längsträgerebene Z_{M} mit den Längsträgern 12, 14 erstreckt.

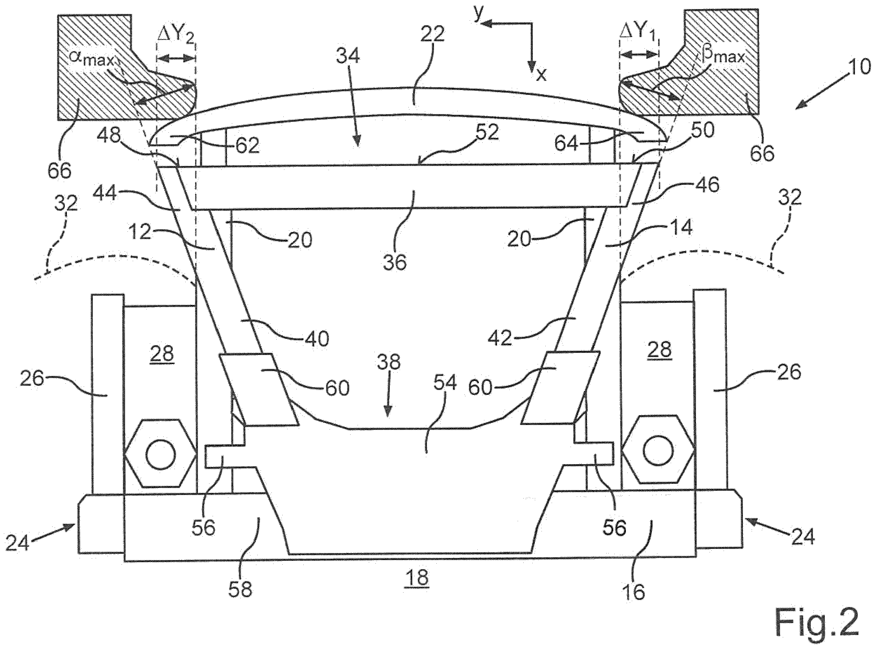

Aus den Fig. 1 und 2 ist dabei insbesondere erkennbar, dass der Hilfsrahmen 34 ein vorderes Querelement 36 und ein hinteres Querelement 38 umfasst, sowie jeweilige Längselemente 40, 42, welche in Fahrzeuglängsrichtung (x-Richtung) von hinten nach vorne hin hier kontinuierlich voneinander divergieren. Dies bedeutet, dass die beiden Längselemente 40, 42, welche sich im Wesentlichen jeweils gradlinig erstrecken, insgesamt in einer V-förmigen Anordnung divergierend zueinander verlaufen. In Folge des Verlaufs der beiden Längselemente 40, 42 des Hilfsrahmens 34 verlaufen diese auch zumindest bereichsweise schräg zu den Längsträgern 12, 14 der Vorbaustruktur 10 beziehungsweise kreuzen diese in einem mittleren Längenbereich in Fahrzeuglängsrichtung (x-Richtung) betrachtet etwa auf Höhe des vorderen Endes des jeweils seitlich zugehörigen Rohbauteils 28.

Durch den schrägen, nach vorne hin divergierenden Verlauf der beiden Längselemente 40, 42 überragen diesen jeweils zugehörige vordere Endbereiche 44, 46 die Längsträger 12, 14 beziehungsweise deren vorderen Endbereiche in Fahrzeugquerrichtung (y-Richtung) außenseitig, und zwar um ein jeweiliges Maß ΔY₁ beziehungsweise ΔY₂. Die beiden Endbereiche 44, 46 der Längselemente 42 weisen dabei jeweilige vordere Stirnseiten 48, 50 auf, welche sich hier bei diesem Ausführungsbeispiel im Wesentlichen und damit idealerweise parallel zu einer in Fahrzeugquerrichtung (y-Richtung) beziehungsweise in Fahrzeughochrichtung (z-Richtung) erstreckenden y-z-Ebene verlaufen. Bei einem anderen Ausführungsbeispiel der Vorbaustrukturanordnung können die Stirnseiten 48, 50 auch schräg zur vorgenannten Ebene verlaufen. Wie aus den Figuren ersichtlich, erstrecken sich die Stirnseiten 48, 50 dabei in einer Ebene beziehungsweise - bezogen auf die Fahrzeuglängsrichtung (x-Richtung) - auf einer Höhe mit einer Vorderseite 52 des vorderen Querelements 36. Die Vorderseite 52 des Querelements 36 schließt demzufolge vorliegend bündig mit den Stirnseiten 48, 50 der beiden Längselemente 40, 42 ab. Die Trennung zu den Längselementen könnte auch an der Hinterkante des Querelements liegen.

In Fig. 2 ist zu erkennen, dass das hintere Querelement 38 des Hilfsrahmens 34 vorliegend durch einen Vorderachsträger 54 gebildet ist, welcher seinerseits unter Vermittlung jeweiliger Befestigungsstellen 56 am seitlich jeweils korrespondierenden Längsträger 12, 14 der Vorbaustruktur 10 sowie in einem rückwärtigen Bereich an einem Fahrzeugboden 58 beziehungsweise an der vorderen Stirnwand 16, welche im Bereich eines Pedalbodens in den Fahrzeugboden 58 übergeht, befestigt ist. Über den Vorderachsträger 54 kann somit eine zusätzliche Verbindung zwischen den Vorbaustruktur 10 und der Bodengruppe des Fahrzeugs erfolgen.

Der Vorderachsträger 54 ist im vorliegenden Fall als flächiges Tragelement ausgebildet, welches beispielsweise mehrschalig aus Blechbauteilen oder auch in einer Gusskonstruktion gefertigt sein kann. Der Vorderachsträger 54 und die Längselemente 40, 42 des Hilfsrahmens 34 sind hier als separate Bauteile ausgebildet, welche miteinander über jeweilige Fügeverbindungen und/oder mechanische Verbindungsmittel, hier beispielsweise jeweilige Anbindungen 60, miteinander verbunden sind.

Insbesondere aus den Fig. 1 und 2 ist ersichtlich, dass die Endbereiche 44, 46 der Längselemente 40, 42 des Hilfsrahmens 34 bezogen auf die Fahrzeugquerrichtung (y-Richtung) um ein etwa identisches Maß, nämlich den Betrag ΔY₁ beziehungsweise ΔY₂ nach außen über die Längsträger 12,14 überstehen. Dabei befinden sind die Endbereiche 44, 46 der Längselemente 40, 42 - in Fahrzeuglängsrichtung (x-Richtung) gesehen - in zumindest teilweiser Überdeckung mit den außenseitig in Fahrzeugquerrichtung (y-Richtung) überstehenden Endbereichen 62, 64 des Querträgers 22. Dabei erstrecken sich die Endbereiche 62, 64 des Querträgers 22 auf Höhe der mittleren Längsträgerebene Z_{M} und die Endbereiche 44, 46 der Längselemente 40, 42 auf Höhe der unteren Längsträgerebene Zu, das bedeutet, dass die der Querträger 22 und damit auch dessen Endbereiche 62, 64 einen Höhenversatz zu den Längselementen 40, 42 der Längselemente des Hilfsrahmens aufweist.

Die Längselemente 40, 42 erstrecken sich dabei in einem Winkel αₘₐₓ beziehungsweise βₘₐₓ relativ zu den korrespondierenden Längsträgern 12, 14.

Bei einer Frontalkollision des Kraftwagens beziehungsweise der Vorbaustrukturanordnung mit einem jeweiligen, in den Fig. 1 und 2 dargestellten Hindernis 66 mit geringer Breitenüberdeckung, bei der der entsprechend seitlich zugeordnete Endbereich 62, 64 des Querträgers 22 durch das Hindernis 66 getroffen wird, nicht jedoch der seitlich korrespondierende Längsträger 12, 14 der mittleren Längsträgerebene Z_{M} , wird erreicht, dass das Hindernis 66 nach dem Kollabieren beziehungsweise Wegknicken des jeweiligen Endbereichs 62, 64 des Querträgers 22 durch den dahinter angeordneten, seitlich korrespondierenden Endbereich 44, 46 des entsprechenden Längselements 40, 42 des Hilfsrahmens 34 abgefangen wird. Im Unterschied zum bisherigen Stand der Technik ist somit mit den Längselementen 40, 42 des Hilfsrahmens 34 eine Schutzeinrichtung geschaffen, mittels welcher Kollisionen der Vorbaustruktur 10 mit geringer Breitenüberdeckung mit dem entsprechenden Hindernis 66 dazu führen, dass dieses nicht übermäßig in die Vorbaustruktur 10 eindringen oder auf das Vorderrad 32 auftreffen kann, ohne dass der lastaufnehmende und lastverteilende Endbereich 44, 46 des jeweiligen Längselements 40, 42 getroffen und beaufschlagt wird.

Der jeweilige Endbereich 44, 46 des Längselements 40, 42 des Hilfsrahmens 34 ist hierbei in zumindest teilweiser Überdeckung mit dem jeweils seitlich korrespondierenden Vorderrad 32 angeordnet, sodass beim Eindringen in die Vorbaustruktur 10 das jeweilige Vorderrad 32 nicht ungehindert getroffen werden kann. Ein weiterer Vorteil ist es, dass seitlich versetzt auftreffende Kollisionsobjekte wie das jeweilige Hindernis 66, welche die mittleren, vorderen Längsträger 12, 14 bei einem Aufprall nicht treffen und aktivieren würden, sehr frühzeitig durch die Längselemente 40, 42 auf Höhe der unteren Längsträgerebene Zo verzögert werden können und über diese die Aufprallenergie auf den Querträger 36 und den Vorderachsträger 54 und über deren Anbindung sowohl auf der stoßzugewandten Fahrzeugseite als auch auf der stoßabgewandten Fahrzeugseite an die mittleren, vorderen Längsträger 12, 14 übertragen wird und gleichzeitig ein Impuls in Fahrzeugquerrichtung (y-Richtung) erzeugt wird, der die Fahrgastzelle zur stoßabgewandten Seite bewegt. Im Ergebnis können durch diese Maßnahmen insbesondere erhebliche Intrusionen in die Fahrgastzelle vermieden werden, und zwar insbesondere bei Frontalkollisionen mit dem Hindernis 66 mit geringer Breitenüberdeckung.

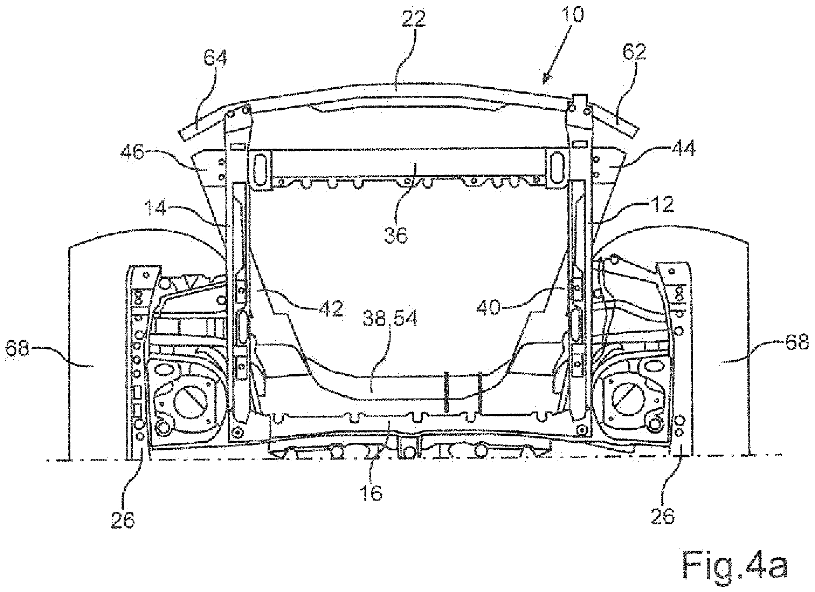

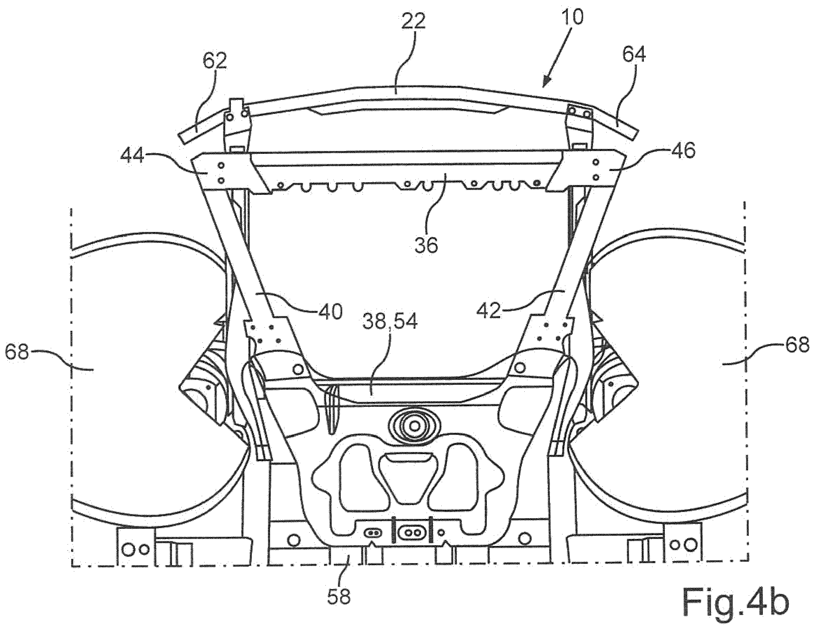

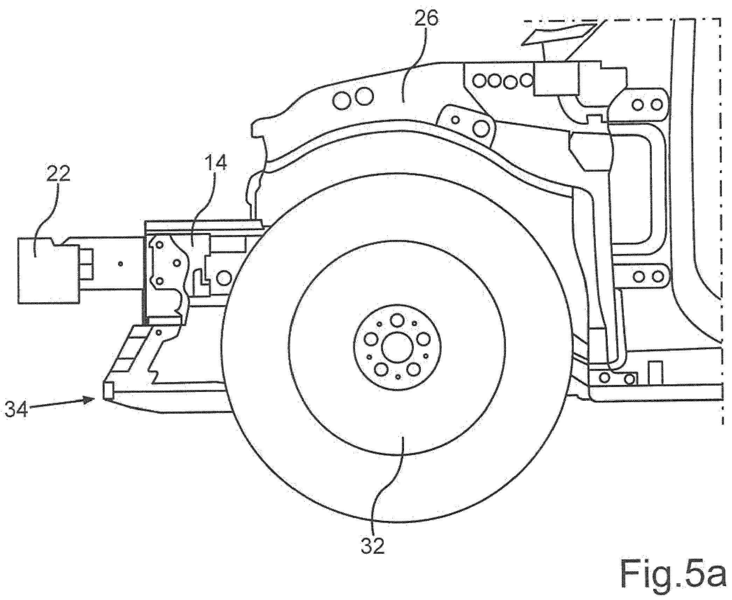

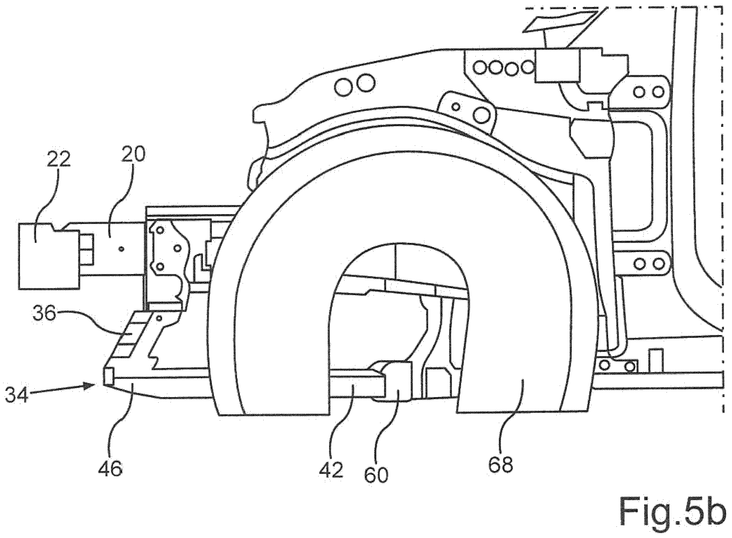

In den Fig. 4a und 4b ist in einer Draufsicht sowie einer Unteransicht eine unmittelbar an einem Kraftwagenrohbau umgesetzte Vorbaustrukturanordnung erkennbar, wie diese im Zusammenhang mit den Fig. 1 bis 3 erläutert worden ist. Die Fig. 5a und 5b zeigen hierbei jeweilige Seitenansichten auf diese Vorbaustruktur mit entsprechendem Vorderrad 32 beziehungsweise bei weggelassenem Vorderrad, wobei aus Fig. 4a und 4b eine Radhausverkleidung 68 erkennbar ist.

## Patentansprüche

1. Vorbaustrukturanordnung für einen Kraftwagenrohbau, mit einer Vorbaustruktur (10), welche zwei in Fahrzeuglängsrichtung verlaufende Längsträger (12, 14) umfasst, welche an ihrem vorderen Ende zumindest mittelbar über einen Querträger (22) miteinander verbunden sind, und mit einem am Kraftwagenrohbau befestigten Hilfsrahmen (34), welcher unterhalb der Längsträger (12, 14) angeordnet ist und welcher ein vorderes und hinteres Querelement (36, 38) sowie jeweilige Längselemente (40,42) umfasst, welche in Fahrzeuglängsrichtung von hinten nach vorne hin voneinander divergieren und zumindest bereichsweise schräg zu den Längsträgern (12, 14) der Vorbaustruktur (10) verlaufen, wobei vordere Endbereiche (44, 46) der Längselemente (40,42) des Hilfsrahmens (34) die Längsträger (12, 14) der Vorbaustruktur (10) in Fahrzeugquerrichtung außenseitig überragen und **dadurch gekennzeichnet, dass** diese Endbereiche (44, 46) der Längselemente (40,42) des Hilfsrahmens (34) in Fahrzeuglängsrichtung gesehen in zumindest teilweiser Überdeckung mit jeweiligen, gegenüber den korrespondierenden Längsträgern (12, 14) außenseitig überstehenden Endbereichen (62, 64) des Querträgers (22) angeordnet sind.

2. Vorbaustrukturanordnung nach Anspruch 1,
**dadurch gekennzeichnet, dass**
die vorderen Endbereiche (44, 46) der Längselemente (40,42) des Hilfsrahmens (34) in Fahrzeugquerrichtung gesehen in zumindest teilweiser Überdeckung mit einem seitlich korrespondierenden Vorderrad (32) des Kraftwagens angeordnet sind. Vorbaustrukturanordnung nach Anspruch 1 oder 2, **dadurch gekennzeichnet**,

3. das hintere Querelement (36, 38) des Hilfsrahmens (34) zumindest teilweise durch einen Vorderachsträger (54) gebildet ist.

4. Vorbaustrukturanordnung nach Anspruch 43,
**dadurch gekennzeichnet, dass**
der Vorderachsträger (54) an den Längsträgern (12, 14) und im Bereich eines Fahrzeugbodens (58) und oder einer Stirnwand (16) der Fahrgastzelle (18) befestigt ist.

5. Vorbaustrukturanordnung nach Anspruch 3 oder 4,
**dadurch gekennzeichnet, dass**
der Vorderachsträger (54) als flächiges Tragelement ausgebildet ist.

6. Vorbaustrukturanordnung nach einem der Ansprüche 3 bis 5,
**dadurch gekennzeichnet, dass**
der Vorderachsträger (54) und die Längselemente (40,42) des Hilfsrahmens (34) als separate Bauteile ausgebildet sind, welche miteinander über jeweilige Fügeverbindungen und/oder mechanische Verbindungsmittel verbunden sind.

7. Vorbaustrukturanordnung nach einem der vorhergehenden Ansprüche,
**dadurch gekennzeichnet, dass**
der Hilfsrahmen (34) eine untere Längsträgerebene (Zu) unterhalb einer Hauptlängsträgerebene (Z_{M}) der Längsträger (12, 14) bildet.

## Claims

1. Front-end structure assembly for a motor vehicle bodyshell, having a front-end structure (10) which comprises two longitudinal members (12, 14) which extend in the longitudinal direction of the vehicle and are connected to one another at their front end at least indirectly via a cross-member (22), and having an auxiliary frame (34) which is fastened to the motor vehicle bodyshell, is arranged below the longitudinal members (12, 14) and comprises a front and rear transverse element (36, 38) and respective longitudinal elements (40, 42) which diverge from one another from the rear to the front in the longitudinal direction of the vehicle and extend obliquely to the longitudinal members (12, 14) of the front-end structure (10) at least in regions, front end regions (44, 46) of the longitudinal elements (40, 42) of the auxiliary frame (34) projecting on the outside beyond the longitudinal members (12, 14) of the front-end structure (10) in the transverse direction of the vehicle, and **characterized in that** these end regions (44, 46) of the longitudinal elements (40, 42) of the auxiliary frame (34) are arranged, when viewed in the longitudinal direction of the vehicle, to at least partly overlap at respective end regions (62, 64) of the cross-member (22) projecting on the outside relative to the corresponding longitudinal members (12, 14).

2. Front-end structure assembly according to claim 1,
**characterized in that**
the front end regions (44, 46) of the longitudinal elements (40, 42) of the auxiliary frame (34) are arranged to at least partly overlap with a laterally corresponding front wheel (32) of the motor vehicle, when viewed in the transverse direction of the vehicle.

3. Front-end structure assembly according to either claim 1 or claim 2,
**characterized in that**
the rear transverse element (36, 38) of the auxiliary frame (34) is at least partly formed by a front axle carrier (54).

4. Front-end structure assembly according to claim 3,
**characterized in that**
the front axle carrier (54) is fastened to the longitudinal members (12, 14) and in the region of a vehicle floor (58) and or an end wall (16) of the passenger compartment (18).

5. Front-end structure assembly according to either claim 3 or claim 4,
**characterized in that**
the front axle carrier (54) is designed as a flat support element.

6. Front-end structure assembly according to any of claims 3 to 5,
**characterized in that**
the front axle carrier (54) and the longitudinal elements (40, 42) of the auxiliary frame (34) are designed as separate components which are connected to one another via respective joints and/or mechanical connecting means.

7. Method according to any of the preceding claims,
**characterized in that**
the auxiliary frame (34) forms a lower longitudinal member plane (Zu) below a main longitudinal member plane (Z_{M}) of the longitudinal members (12, 14).

## Revendications

1. Agencement de structure d'avant-corps pour une carrosserie de véhicule automobile, comportant une structure d'avant-corps (10) qui comprend deux longerons (12, 14) s'étendant dans la direction longitudinale de véhicule, lesquels sont reliés entre eux à leur extrémité avant au moins indirectement par l'intermédiaire d'une barre transversale (22), et comportant un faux-châssis (34) fixé à la carrosserie de véhicule automobile, lequel est disposé en dessous des longerons (12, 14) et comprend un élément transversal (36, 38) avant et arrière ainsi que des éléments longitudinaux (40, 42) respectifs, lesquels éléments longitudinaux divergent l'un de l'autre depuis l'arrière vers l'avant dans la direction longitudinale de véhicule et s'étendent au moins dans certaines zones en oblique par rapport aux longerons (12, 14) de la structure d'avant-corps (10), dans lequel des zones d'extrémité (44, 46) avant des éléments longitudinaux (40, 42) du faux-châssis (34) dépassent côté extérieur, dans la direction transversale de véhicule, les longerons (12, 14) de la structure d'avant-corps (10), et **caractérisé en ce que** lesdites zones d'extrémité (44, 46) des éléments longitudinaux (40, 42) du faux-châssis (34) sont disposées, vues dans la direction longitudinale de véhicule, en recouvrement au moins partiel avec des zones d'extrémité (62, 64) respectives de la barre transversale (22) qui font saillie côté extérieur par rapport aux longerons (12, 14) correspondants.

2. Agencement de structure d'avant-corps selon la revendication 1,
**caractérisé en ce que**
les zones d'extrémité (44, 46) avant des éléments longitudinaux (40, 42) du faux-châssis (34) sont disposées, vues dans la direction transversale de véhicule, en recouvrement au moins partiel avec une roue avant (32) latéralement correspondante du véhicule automobile.

3. Agencement de structure d'avant-corps selon la revendication 1 ou 2,
**caractérisé en ce que**
l'élément transversal (36, 38) arrière du faux-châssis (34) est formé au moins partiellement par un support d'essieu avant (54).

4. Agencement de structure d'avant-corps selon la revendication 3,
**caractérisé en ce que**
le support d'essieu avant (54) est fixé aux longerons (12, 14) et dans la zone d'un plancher de véhicule (58) et ou d'une paroi frontale (16) de l'habitacle (18).

5. Agencement de structure d'avant-corps selon la revendication 3 ou 4,
**caractérisé en ce que**
le support d'essieu avant (54) est réalisé sous forme d'élément de support plat.

6. Agencement de structure d'avant-corps selon l'une des revendications 3 à 5,
**caractérisé en ce que**
le support d'essieu avant (54) et les éléments longitudinaux (40, 42) du faux-châssis (34) sont réalisés sous forme de pièces séparées qui sont reliées entre elles par l'intermédiaire de liaisons d'assemblage respectives et/ou d'un moyen de liaison mécanique.

7. Agencement de structure d'avant-corps selon l'une des revendications précédentes,
**caractérisé en ce que**
le faux-châssis (34) forme un plan de longeron inférieur (Zu) en dessous d'un plan de longeron principal (Z_{M}) des longerons (12, 14).
